# FASCICULE DE BREVET EUROPEEN

(11) **EP 3 152 166 B1**
(45) Date de publication et mention de la délivrance du brevet: **19.09.2018**
(21) Numéro de dépôt: 16728897.6
(22) Date de dépôt: 03.06.2016
(51) Int. Cl.: C02F 11/10, C10L 9/08, F23G 5/027, F23G 7/00, B01F 3/04, C02F 1/38, C02F 3/22

(54) **REACTEUR DE CARBONISATION HYDROTHERMALE A MELANGE OPTIMISE DE BOUE ET VAPEUR**
HYDROTHERMALER KARBONISIERUNGSREAKTOR MIT OPTIMIERTER SCHLAMM- UND DAMPFMISCHUNG
HYDROTHERMAL CARBONIZATION REACTOR WITH OPTIMISED SLUDGE AND STEAM MIXING

(30) Priorité: 05.06.2015 FR 1555142
(43) Date de publication de la demande: 12.04.2017
(60) Demande divisionnaire: 18187497.5
(73) Titulaire: Suez International, 92040 Paris la Défense Cedex (FR)
(72) Inventeur: PARDO, Pierre Emmanuel, 91400 Orsay (FR); BOURDAIS, Jean-Louis, 44110 Chateaubriant (FR)
(74) Mandataire: IPAZ
(86) Numéro de dépôt international: PCT/EP2016/062698
(87) Numéro de publication internationale: WO 2016/193460

(56) Documents cités:
- WO-A1-2010/092040
- WO-A1-2014/027059
- NZ-A- 578 521
- TREMEL ALEXANDER ET AL: "Entrained flow gasification of biocoal from hydrothermal carbonization", FUEL, vol. 102, 23 avril 2012 (2012-04-23), pages 396-403, XP028937544, ISSN: 0016-2361, DOI: 10.1016/J.FUEL.2012.05.024

## Description

### Domaine technique

La présente invention concerne un réacteur de traitement.

Le domaine de l'invention est plus particulièrement mais de manière non limitative celui du traitement de boues fortement chargées en matières organiques, provenant par exemple de processus de dépollution d'eaux usées urbaines ou industrielles, ou d'opérations de curage de réseaux. Un tel traitement vise à réduire le volume des boues, à les stabiliser à la fois sur le plan biologique et sur le plan physico-chimique et à produire des sous-produits valorisables.

L'invention concerne plus particulièrement le domaine du réacteur de traitement en continu de boues chargées en matières organiques, notamment par carbonisation hydrothermale.

### Etat de la technique antérieure

L'état de l'art a développé deux familles de traitements :
- l'hydrolyse thermique,
- la carbonisation hydrothermale.

La technique d'hydrolyse thermique des boues a été mise au point par Porteous au début du 20ème siècle. Cette technique met en oeuvre des réacteurs sous pression, fonctionnant par séquence. La boue est pompée dans un premier réacteur dans laquelle de la vapeur produite par une chaudière est injectée jusqu'à l'obtention d'une température d'environ 180°C pour une pression de 1,5 MPa. La température est ensuite maintenue pendant 30 minutes puis la boue est évacuée sous sa propre pression à travers un échangeur thermique. Cet échangeur thermique est utilisé pour récupérer la chaleur de la boue sortant du premier réacteur et pour réchauffer la boue entrant dans un deuxième réacteur. De nombreuses évolutions et améliorations sont intervenues depuis pour améliorer la productivité et assurer un fonctionnement en continu. Les boues hydrolysées font ensuite l'objet de traitements biologiques, par exemple de digestion anaérobie pour réduire les quantités de boues en produisant du biogaz.

La technique de la carbonisation hydrothermale (HTC) se rapproche de l'hydrolyse thermique mais ne vise pas à préparer des boues en vue de leur digestion. Elle vise à préparer les boues en vue de leur transformation en bio-charbon de grande qualité, par le recours à de la chaleur et à une pression généralement plus élevée que dans l'hydrolyse thermique, et pendant un temps plus long que pour l'hydrolyse thermique (quelques heures) et généralement en présence d'un réactif.

La technique HTC permet également de produire du bio-charbon, un produit semblable à l'humus, qui peut être employé pour amender les sols agricoles et stocker le CO2. Le procédé de carbonisation hydrothermale a été décrit en 1913 par Friedrich Bergius, et lui a valu le Prix Nobel de chimie en 1931.

Ces traitements sont réalisés dans des réacteurs, soit en mode séquentiel (batch), plus simple à réaliser, soit - plus récemment - en continu.

On connaît dans l'état de la technique le brevet FR3010403 qui décrit un procédé et un dispositif pour l'hydrolyse thermique de boues comprenant un réacteur tubulaire d'hydrolyse thermique présentant une première portion verticale directement prolongée par une deuxième portion verticale. L'entrée du réacteur est prévue en partie supérieure de ladite première portion verticale. La sortie dudit réacteur est prévue en partie inférieure de ladite deuxième portion verticale, ou inversement. L'entrée du réacteur est alimentée par au moins un injecteur-mélangeur dynamique primaire ayant une sortie de mélange uniforme primaire. Les boues à traiter contenant de la matière organique sont introduites dans cet injecteur-mélangeur dynamique primaire qui comprend aussi des moyens d'amenée de vapeur vive dans un injecteur-mélangeur dynamique secondaire.

Le brevet WO2014135734 décrit une installation d'hydrolyse présentant deux sections de circulation connectées en série pour faire circuler de la matière organique à traiter, et des moyens pour alimenter en continu une première section de circulation en matière organique, pour transférer la matière organique depuis cette première section de circulation à une deuxième section de circulation et pour extraire la matière organique de la deuxième section de circulation. La vapeur et la matière organique, typiquement des boues, sont injectés au même endroit, comme dans le brevet FR3010403. Un autre exemple d'une solution connue de l'art antérieur est décrite dans le brevet WO2010092040.

### Inconvénients des solutions de l'art antérieur

Les solutions de l'art antérieur ne sont pas totalement satisfaisantes car elles impliquent un apport en vapeur important, lors de l'injection dans le réacteur. Ceci se traduit par une consommation énergétique mal maîtrisée et un coût de fonctionnement élevé, ainsi que par une siccité dégradée.

Les solutions de l'art antérieur sont adaptées à des traitements à des conditions de pression et de température intermédiaires, typiquement de 0,6 MPa et de 150°C, pour des temps de séjour relativement faibles de l'ordre de 30 minutes. Ils concernent spécifiquement des traitements par hydrolyse thermique, pour préparer des boues en vue d'une étape ultérieure de digestion anaérobie.

Par ailleurs, les boues introduites dans un réacteur peuvent contenir des débris solides, notamment des agrégats minéraux qui peuvent colmater l'entrée du réacteur ou abimer les structures intérieures du réacteur. Les solutions de l'art antérieur ne permettent pas de réduire ces éléments dans le réacteur.

Enfin, les injecteurs-mélangeurs nécessaires pour homogénéiser le mélange boues vapeurs constituent des équipements chers et fragiles.

Le but de la présente invention est de résoudre au moins un des problèmes ou inconvénients susmentionnés.

### Exposé de l'invention

Afin de remédier à ces inconvénients, l'invention propose un réacteur de traitement, notamment par carbonisation hydrothermale, de boues chargées en matières organiques, comportant :
- une enceinte comprenant une chambre intérieure agencée pour recevoir les boues et pour constituer un chemin de circulation des boues apte à permettre une circulation des boues,
- une entrée de boues agencée pour introduire les boues dans une zone d'introduction de boues de la chambre intérieure,
- une sortie de boues agencée pour évacuer au moins une partie des boues contenues dans la chambre intérieure, et
- une entrée de vapeur agencée pour injecter de la vapeur dans une zone d'injection de vapeur de la chambre intérieure suivant un sens d'injection de vapeur, le sens d'injection de vapeur étant différent d'un sens de circulation des boues dans la zone d'injection de vapeur le long du chemin de circulation, la zone d'injection de vapeur étant séparée de la zone d'introduction de boues.

De préférence, la chambre intérieure est de dimension verticale L (la verticale étant définie selon la gravitation terrestre), la zone d'injection de vapeur pouvant être séparée de la zone d'introduction de boues par une distance supérieure à L/12, de préférence supérieure à L/8, plus préférentiellement supérieure à L/4. Cette distance est considérée comme la distance la plus courte entre deux points de l'entrée de boues et de l'entrée de vapeur respectivement.

Le sens d'injection de vapeur est à contre-courant (de préférence opposé) au sens de circulation des boues (en moyenne) dans la zone d'injection de vapeur. Une telle injection de vapeur à contre-courant des boues optimise les turbulences crées par cette injection.

Le réacteur comporte en outre un circulateur agencé pour faire circuler les boues dans la chambre intérieure suivant le chemin de circulation.

Le chemin de circulation comprend au moins une boucle fermée.

Dans ce document, les termes « inférieur », « supérieur », « haut », « bas », « ascendant », « descendant », « dessus », « dessous », ou encore « surmonté » renvoient à la verticale définie selon la gravitation terrestre.

Le réacteur peut comprendre, dans une partie supérieure de la chambre intérieure, un volume de dégazage agencé pour recueillir des effluents gazeux contenus dans les boues, le réacteur pouvant comprendre en outre au moins un évent agencé pour évacuer ces effluents gazeux.

De préférence, le réacteur peut comporter au moins un orifice agencé pour injecter de l'acide dans l'enceinte.

Selon l'invention, l'enceinte comprend une paroi agencée pour séparer deux parties du chemin de circulation ayant des sens (moyens) de circulation de boues opposés.

Selon l'invention, la paroi forme un tube et la chambre intérieure comprend un espace intérieur situé à l'intérieur du tube et un espace extérieur situé à l'extérieur du tube, le réacteur étant agencé :
- pour que la zone d'injection de vapeur soit située dans une région inférieure de l'espace intérieur du tube, la région inférieure comprenant une première extrémité du tube,
- pour que le circulateur soit situé, au moins en partie, dans une région supérieure de l'espace intérieur du tube, la région supérieure comprenant une deuxième extrémité du tube opposée à la première extrémité, et
- pour que la zone d'introduction de boues soit située entre la région inférieure et la région supérieure de l'espace intérieur du tube.

Suivant une deuxième configuration, non couverte par les revendications, le réacteur est agencé :
- pour que la zone d'introduction de boues soit située dans une région inférieure de l'espace intérieur du tube, la région inférieure comprenant une première extrémité du tube,
- pour que le circulateur soit situé, au moins en partie, dans une région supérieure de l'espace intérieur du tube, la région supérieure comprenant une première extrémité du tube, et
- pour que la zone d'injection de vapeur soit située entre la région inférieure et la région supérieure de l'espace intérieur du tube.

Selon une option de l'invention, compatible avec de multiples combinaisons des caractéristiques décrites ci-dessus, l'enceinte comprend un chemisage intérieur agencé pour délimiter, au moins en partie, le chemin de circulation de manière à constituer :
- une voie ascendante dans un passage annulaire compris entre une face interne de la chambre intérieure et le chemisage,
- une voie descendante dans un conduit cylindrique formé par le chemisage,
- un tronçon transversal supérieur agencé pour autoriser une circulation des boues de la voie ascendante vers la voie descendante,
- un tronçon transversal inférieur agencé pour autoriser une circulation des boues de la voie descendante vers la voie ascendante.

Alternativement, le chemisage intérieur peut être agencé pour délimiter, au moins en partie, le chemin de circulation de manière à constituer :
- une voie descendante dans un passage annulaire compris entre une face interne de la chambre intérieure et le chemisage,
- une voie ascendante dans un conduit cylindrique formé par le chemisage,
- un tronçon transversal supérieur agencé pour autoriser une circulation des boues de la voie ascendante vers la voie descendante,
- un tronçon transversal inférieur agencé pour autoriser une circulation des boues de la voie descendante vers la voie ascendante.

Suivant encore une autre configuration, non couverte par les revendications, le chemin de circulation est délimité, au moins en partie, par :
- un premier tube définissant un chemin ascendant,
- un deuxième tube définissant un chemin descendant,
- un premier conduit transversal agencé pour que le premier et le deuxième tubes débouchent, à leurs parties supérieures, dans ce premier conduit transversal, le réacteur comprenant, dans une partie supérieure du premier conduit transversal, un volume de dégazage agencé pour recueillir des effluents gazeux contenus dans les boues, et
- un deuxième conduit transversal agencé pour que le premier et le deuxième tubes débouchent, à leurs parties inférieures, dans ce deuxième conduit transversal.

Selon une option de la configuration mentionnée ci-dessus, non couverte par les revendications, le réacteur comprend un circulateur qui est agencé pour générer la circulation des boues dans le deuxième conduit transversal.

Le réacteur peut comporter en outre un hydrocyclone agencé pour éliminer sélectivement des particules (lourdes) contenues dans les boues en circulation dans l'enceinte.

### Description des figures et du mode de réalisation

D'autres avantages et particularités de l'invention apparaîtront à la lecture de la description détaillée de mises en oeuvre et du mode de réalisation nullement limitatifs, et des dessins annexés suivants :
- la figure 1 représente une vue schématique en coupe d'un réacteur selon un mode de réalisation de l'invention,
- la figure 2 représente une vue schématique en coupe d'un réacteur selon une deuxième configuration de l'invention, non couverte par les revendications,
- la figure 3 représente une vue schématique en coupe d'un réacteur selon une troisième configuration de l'invention, non couverte par les revendications,
- la figure 4 représente une vue schématique en coupe d'un hydrocyclone compatible avec le réacteur de la figure 3.

Le mode de réalisation décrit ci-après étant nullement limitatif, on pourra notamment considérer des variantes de l'invention ne comprenant qu'une sélection de caractéristiques décrites, isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

Dans la présente description du mode de réalisation et variantes, la vapeur est par défaut de la vapeur d'eau.

Dans la présente description, le terme « circulation » de boues, d'un mélange ou d'un liquide dans le réacteur désigne un mouvement quelconque de ces boues, de ce mélange ou de ce liquide dans le réacteur.

Dans la présente description, l'expression « chemin de circulation » désigne le chemin le long duquel ce mouvement quelconque est effectué dans le réacteur.

Le réacteur selon l'invention est typiquement apte à réaliser un traitement par carbonisation hydrothermale de boues chargées en matières organiques.

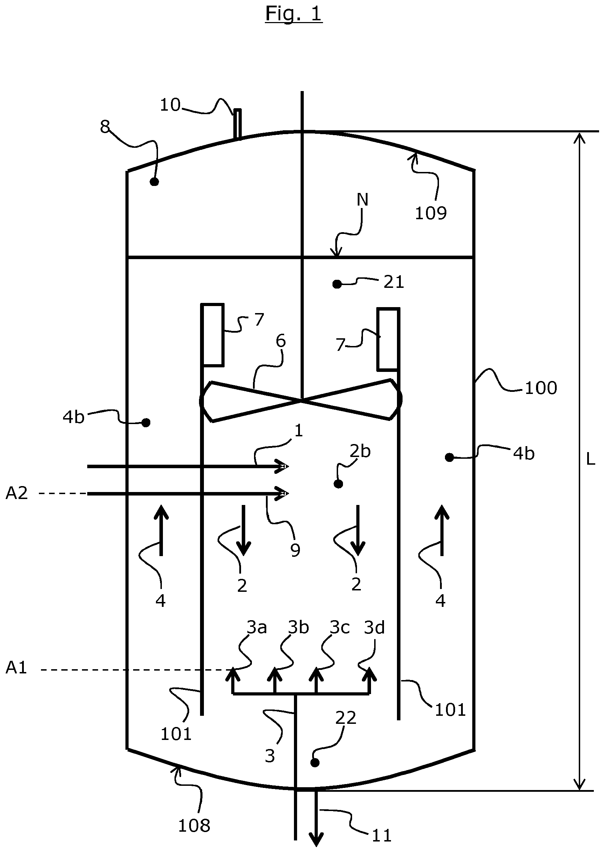

La figure 1 représente une vue en coupe d'un réacteur selon le mode de réalisation de l'invention comportant :
- une enceinte 100 comprenant une chambre intérieure agencée pour recevoir les boues et pour constituer un chemin de circulation des boues apte à permettre une circulation des boues, le sens moyen de circulation des boues le long du chemin étant représenté par les flèches 2 et 4 sur la figure 1, définissant en l'occurrence un sens descendant 2 et un sens ascendant 4,
- une entrée de boues 1 agencée pour introduire les boues dans une zone d'introduction de boues de la chambre intérieure,
- une sortie de boues 11 agencée pour évacuer au moins une partie des boues contenues dans la chambre intérieure, et
- une entrée de vapeur 3 agencée pour injecter de la vapeur dans une zone d'injection de vapeur de la chambre intérieure suivant un sens d'injection de vapeur, le sens d'injection de vapeur étant différent d'un sens moyen de circulation des boues 2 dans la zone d'injection de vapeur le long du chemin de circulation, la zone d'injection de vapeur étant séparée de la zone d'introduction de boues.

On remarque que l'entrée de vapeur 3 n'est pas affleurante sur une face interne de la chambre intérieure de l'enceinte 100, mais débouche au coeur de la chambre intérieure de l'enceinte 100, de sorte que l'entrée de vapeur 3 est entourée par le mélange boue+vapeur compris dans la chambre intérieure de l'enceinte 100.

Par circulation des boues, on entend typiquement dans ce mode de réalisation un déplacement relatif des boues définissant une vitesse moyenne de déplacement des boues Vd au sein de l'enceinte 100 typiquement de 0,1 à 3 m/s, une vitesse moyenne d'injection des boues Ve par l'entrée de boues 1 typiquement de 0,005 à 0,1m/s, ou encore un ratio Vd/Ve typiquement de 5 à 100.

Dans l'exemple de la figure 1, l'enceinte 100, représentée en coupe, est une enceinte fermée (i.e. dont l'intérieur n'est pas constamment à l'air libre). L'enceinte 100 est de forme sensiblement cylindrique autour d'une direction verticale (direction haut-bas ou bas-haut sur la figure 1), cette enceinte 100 cylindrique étant fermée par une surface inférieure 108 et une surface supérieure 109 de forme sensiblement hémisphérique (surfaces concaves).

La chambre intérieure est de dimension verticale L, la verticale étant définie selon la gravitation terrestre. Dans le réacteur de la figure 1, la gravitation terrestre s'exerce suivant ladite direction verticale.

La dimension verticale L correspond ici à la hauteur de la chambre intérieure de l'enceinte 100 mesurée le long de ladite direction verticale, et reliant un plan horizontal passant par le point le plus bas de la surface inférieure 108 (concave vu de l'intérieur de l'enceinte) à un plan horizontal passant par le point le plus haut de la surface supérieure 109 (concave vu de l'intérieur de l'enceinte).

Comme illustré en figure 1, la zone d'injection de vapeur est distincte de la zone d'introduction de boues. De préférence, ces zones sont séparées d'une distance supérieure à L/12, de préférence supérieure à L/8, plus préférentiellement supérieure à L/4, cette distance étant considérée comme la distance la plus courte entre deux points de l'entrée de boues 1 et de l'entrée de vapeur 3 respectivement.

En outre, le sens d'injection de vapeur est à contre-courant (de préférence opposé) au sens de circulation des boues dans la zone d'injection de vapeur.

Dans la présente description, on entend par l'expression « contre-courant » le fait que, pour un sens de circulation (en moyenne) des boues dans la zone d'injection de vapeur selon une direction principale (verticale vers le bas dans le cas de la figure 1), le sens d'injection de vapeur a au moins une composante opposée (verticale vers le haut) à la direction principale. Autrement dit, pour un sens de circulation (en moyenne) des boues dans la zone d'injection de vapeur selon une direction principale, le sens d'injection de vapeur forme un angle avec la direction principale compris entre pi/2 et 3*pi/2 radians. De préférence, cet angle est de pi radians (vecteurs opposés).

Ainsi, on voit en figure 1 que l'entrée de vapeur 3 réalise une injection de la vapeur par un piquage prévu dans le fond de l'enceinte de sorte que l'entrée de vapeur 3 débouche dans la chambre intérieure dans une zone 2b dans laquelle les boues se déplacent suivant le sens descendant 2 et de sorte que cette injection de vapeur soit réalisée sensiblement vers le haut (représentée par les flèches 3a, 3b, 3c et 3d). La vapeur est donc injectée à contre-sens de circulation des boues (représentée par les flèches 2 dans cette zone 2b). La vapeur peut être injectée par une buse centrale, ou encore par plusieurs buses 3a, 3b, 3c, 3d. La ou les buses 3a, 3b, 3c, 3d peuvent être associées à un ou plusieurs déflecteurs ou diffuseurs (non représentés) pour augmenter les turbulences.

Dans le mode de réalisation de la figure 1, l'entrée de vapeur 3 et l'entrée de boues 1 sont agencées pour que la vapeur soit injectée à une altitude A1 inférieure de l'altitude A2 à laquelle les boues sont introduites.

Un intense brassage a lieu entre la vapeur qui a tendance à monter vers le haut de l'enceinte 100 et les boues de rhéologie faible, proche de l'eau, qui ont tendance à descendre vers le bas de l'enceinte 100. Ce brassage casse les éventuelles mottes de boues qui ne se seraient pas encore liquéfiées. De plus, ce brassage intensifie la condensation de la vapeur qui rapidement fournit sa chaleur au milieu ambiant.

L'enceinte 100 du réacteur de la figure 1 comprend un chemisage intérieur 101 agencé pour délimiter le chemin de circulation de manière à constituer :
- une voie ascendante 4b dans un passage annulaire compris entre une face interne de la chambre intérieure et le chemisage 101,
- une voie descendante 2b dans un conduit cylindrique formé par le chemisage 101,
- un tronçon transversal supérieur 21 agencé pour autoriser une circulation des boues de la voie ascendante 4b vers la voie descendante 2b,
- un tronçon transversal inférieur 22 agencé pour autoriser une circulation des boues de la voie descendante 2b vers la voie ascendante 4b.

Dans l'exemple décrit, l'introduction des boues est réalisée par un piquage 1 débouchant dans la voie descendante 2b. A cet effet, un conduit d'arrivée de boues traverse la paroi de l'enceinte 100 ainsi que le chemisage intérieur 101 pour déboucher dans la voie descendante 2b.

Le réacteur de la figure 1 comporte en outre un circulateur 6, par exemple à pâles, agencé pour faire circuler les boues (mélangées à la vapeur) dans la chambre intérieure suivant le chemin de circulation, c'est-à-dire pour créer ou maintenir directement à l'intérieur du réacteur la circulation (i.e. le mouvement) des boues (mélangées à la vapeur), indépendamment de l'amplitude et de la direction de la vitesse d'introduction des boues dans l'enceinte 100 du réacteur par l'entrée de boues 1.

Selon des variantes non représentées, le circulateur 6 peut comprendre :
- un agitateur avec une ou plusieurs pales, et/ou
- une vis, et/ou
- une pompe, et/ou
- une boucle de recirculation des boues, et/ou
- un bullage.

Le circulateur 6 est de préférence disposé dans une partie supérieure de la voie descendante 2b, en-dessous du tronçon transversal supérieur 21 et au-dessus de la zone d'introduction de boues.

En d'autres termes, l'enceinte 100 de la figure 1 comprend une paroi 101 (qui correspond au chemisage intérieur 101 précédemment décrit) agencée pour séparer deux parties du chemin de circulation ayant des sens 2, 4 opposés de circulation de boues. Ainsi, les boues circulent dans le sens ascendant 4 dans la voie ascendante 4b, et elles circulent dans le sens descendant 2 dans la voie descendante 2b.

Dans cet exemple, la paroi 101 forme un tube, la chambre intérieure de l'enceinte 100 comprenant un espace intérieur (voie descendante 2b) à l'intérieur du tube 101 et un espace extérieur (voie ascendante 4b) à l'extérieur du tube. Le tube 101 correspond au chemisage intérieur 101 précédemment décrit.

Dans ce mode de réalisation, le réacteur est agencé :
- pour que la zone d'injection de vapeur soit située dans une région inférieure de l'espace intérieur 2b du tube 101, la région inférieure comprenant une première extrémité du tube (vers le bas de la figure 1),
- pour que le circulateur 6 soit situé, au moins en partie, dans une région supérieure de l'espace intérieur 2b du tube 101, la région supérieure comprenant une deuxième extrémité du tube (vers le haut de la figure) opposée à la première extrémité, et
- pour que la zone d'introduction de boues soit située entre la région inférieure et la région supérieure de l'espace intérieur 2b du tube 101.

Ainsi, le chemin de circulation comprend au moins une boucle fermée qui, dans l'exemple de la figure 1, passe par l'intérieur 2b et par l'extérieur 4b du tube 101. Chaque boucle fermée comprend en outre une bifurcation vers la sortie de boues 11.

De manière idéalisée, si on considère des lignes de flux de boues en circulation dans le réacteur, ces lignes de flux dessinent au moins une boucle fermée avec une bifurcation possible vers la sortie des boues 11.

Le réacteur comprend, dans une partie supérieure de la chambre intérieure, au-dessus du tronçon transversal supérieur 21, un volume de dégazage 8 agencé pour recueillir des effluents gazeux contenus dans les boues, le réacteur comprenant en outre au moins un évent 10 agencé pour évacuer ces effluents gazeux.

Ce volume de dégazage 8 est délimité, en figure 1, par un niveau N atteint par les boues contenues dans l'enceinte 100, par ladite surface supérieure 109 de l'enceinte 100 et par une partie de la face interne de la chambre intérieure de l'enceinte 100, cette face interne étant celle de forme sensiblement cylindrique.

La délimitation du volume de dégazage 8 et des boues contenues dans l'enceinte 100 par le niveau N est consécutive du fait que le réacteur est sous pression et que les effluents gazeux recueillis dans le volume de dégazage 8 poussent les boues vers le bas.

Les boues contenues dans l'enceinte 100 du réacteur circulent typiquement de manière continue pour effectuer plusieurs cycles (ou passages le long du même chemin de circulation) avant leur évacuation par la sortie de boues 11.

Pour illustrer une mise en oeuvre du réacteur, un flux entrant de boues est introduit dans la voie descendante 2b, entre des pales du circulateur 6 et les buses 3a, 3b, 3c, 3d d'injection de vapeur 3. Entre ces deux zones d'introduction de boues et d'injection de vapeur, le mélange constitué par les boues et la vapeur est soumis à de fortes turbulences en raison de la circulation à contre-courant de la vapeur et des boues. Ces turbulences augmentent les interactions entre la vapeur et les boues, ce qui permet d'homogénéiser le mélange. Les boues peuvent contenir des fibres, qui sont fortement désagrégées dans cette zone d'interaction avec la vapeur, avant d'arriver sur le circulateur 6 en suivant le chemin de circulation par la voie descendante 2b, le tronçon transversal inférieur 22, la voie ascendante 4b, puis le tronçon transversal supérieur 21. On réduit ainsi les problèmes d'enroulement de fibres sur les pales du circulateur 6.

En outre, avec une telle mise en oeuvre, des parties minérales et des agrégats contenus dans les boues ont tendance à se déposer par gravité au fond de la chambre intérieure de l'enceinte 100 (sur une face interne de la surface inférieure 108), ce qui réduit les interactions de ces parties minérales et agrégats avec les pales du circulateur 6.

Le dimensionnement du chemisage intérieur 101 est fait de telle sorte que la vitesse moyenne de circulation des boues au niveau de la voie ascendante 4b soit du même ordre de grandeur que celle dans la voie descendante 2b. Les rapports de vitesses de circulation des boues entre la voie ascendante 4b et la voie descendante 2b sont de l'ordre de 0,5 à 5. Typiquement les vitesses dans la voie ascendante 2b sont de 0,1-3 m/s, typiquement 0,5-1,5 m/s.

Dans un mode de mise en oeuvre, des boues froides sont injectées dans la voie descendante 2b avec une vitesse d'injection faible par rapport à la vitesse de circulation, typiquement de l'ordre de 0,005 à 0,1 m/s. Du fait du phénomène de cisaillement des boues par la vapeur, les boues froides introduites sont rapidement entrainées par les boues chaudes en circulation uniformément mélangée et leur température augmente ainsi relativement rapidement.

Du fait du circulateur 6, les boues uniformément mélangées par leurs interactions avec la vapeur injectée sont conduites dans la voie ascendante 4b où elles continuent de s'uniformiser.

Le mélange boues-vapeur arrive ensuite dans le tronçon transversal supérieur 21 plus calme en termes de turbulences. Dans ce tronçon transversal supérieur 21, des bulles de gaz incondensables se séparent des boues, et montent dans le volume de dégazage 8 sans repartir vers le bas. Le gaz ainsi produit par la séparation des bulles est régulièrement éliminé par l'évent 10, typiquement par l'intermédiaire d'un clapet (non représenté) commandé par un régulateur de pression (non représenté).

Les boues retournent ensuite dans la voie descendante 2b à travers le circulateur 6. A ce stade, les boues sont liquéfiées, la plupart des mottes étant réduites de telle sorte qu'elles ne viennent plus gêner le fonctionnement du circulateur 6. Les réactions de carbonisation peuvent avoir lieu ensuite pendant plusieurs cycles de circulation des boues entre les voies descendante 2b et ascendante 4b successivement (c'est-à-dire dans la boucle fermée).

Un système anti vortex comme des pales 7 peut être installé au-dessus du circulateur 6 pour éviter la formation de chemins préférentiels et des tourbillons type vortex dans la voie descendante 2b du réacteur.

Le réacteur de la figure 1 comporte un orifice 9 agencé pour injecter de l'acide dans l'enceinte 100. L'acide est de préférence injecté dans la voie descendante 2b, en aval (relativement à la circulation des boues) de la zone d'introduction des boues et en amont de la zone d'injection de vapeur. Cette injection d'acide peut aussi se faire dans la voie ascendante 4b ou dans l'un ou l'autre des tronçons transversaux supérieur 21 ou inférieur 22 (non représenté).

L'évacuation des boues carbonisées, c'est-à-dire leur extraction de la chambre intérieure de l'enceinte 100 par la sortie de boues 11, se fait préférentiellement en partie basse du réacteur, au niveau du tronçon transversal inférieur 22, par exemple au fond de l'enceinte 100 par un piquage réalisé au travers de la surface inférieure 108. Cette configuration permet la vidange et l'élimination de matières solides non carbonisables comme le sable. Ainsi ces matières solides sont préférentiellement extraites du réacteur tandis que le contenu organique des boues, liquide, continue de circuler sur le chemin de circulation.

A noter qu'en cas de défaillance du circulateur 6, l'injection de vapeur par l'entrée de vapeur 3 permet le brassage des boues dans la voie descendante 2b et une circulation naturelle.

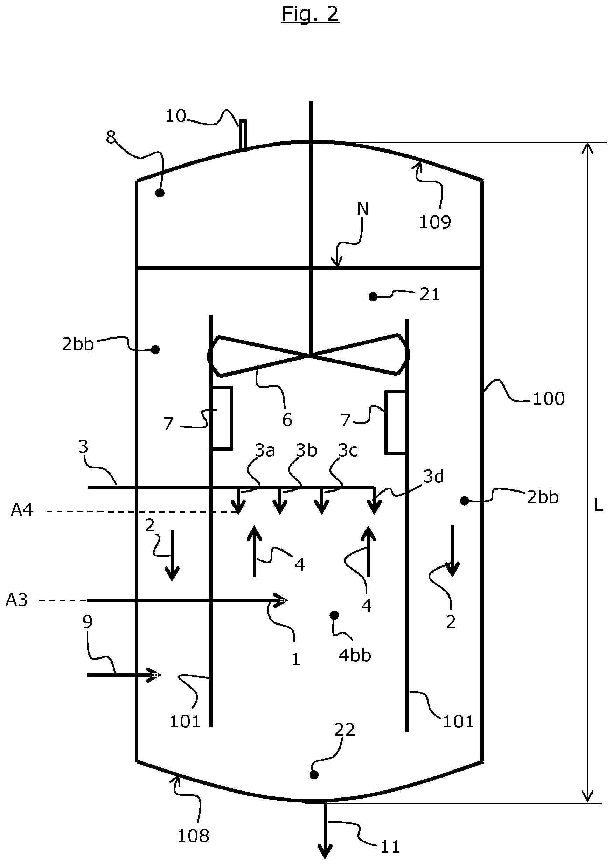

La figure 2 représente une deuxième configuration de l'invention, non couverte par les revendications, dans lequel le réacteur comprend les mêmes constituants ou dispositifs mécaniques que le réacteur du mode de réalisation de l'invention. Seul diffère l'agencement de ces constituants ou dispositifs mécaniques. Ainsi, la figure 2 est décrite essentiellement suivant ses différences avec la figure 1.

Dans cette deuxième configuration, les boues sont introduites en partie basse de la voie ascendante 4bb.

La voie descendante 2bb est située non plus dans l'espace intérieur 4bb du tube 101 comme dans la solution représentée en figure 1, mais dans l'espace extérieur 2bb au tube 101.

Ainsi, la voie ascendante 4bb est située à l'intérieur du chemisage 101. Ces deux voies descendante 2bb et ascendante 4bb sont reliées, comme dans la solution décrite en figure 1, par des tronçons transversaux supérieur 21 et inférieur 22.

L'injection de vapeur est prévue par un piquage débouchant dans la voie ascendante 4bb dans l'espace intérieur du chemisage 101.

L'introduction des boues est réalisée dans la voie ascendante 4bb, dans l'espace intérieur du tube 101.

Dans cette deuxième configuration de la figure 2, l'entrée de vapeur 3 et l'entrée de boues 1 sont agencées pour que les boues soient introduites à une altitude A3 inférieure de l'altitude A4 à laquelle la vapeur est injectée.

Le réacteur comprend aussi un système anti vortex 7 cette fois-ci installé au-dessous du circulateur 6, c'est-à-dire en amont du circulateur 6 relativement au sens de circulation 4 des boues similairement au mode de réalisation de la figure 1.

Toute autre configuration, par exemple agencement de l'entrée de boues 1 et/ou de l'entrée de vapeur 3 pour introduire les boues et/ou injecter de la vapeur dans la voie ascendante 4b (mode de réalisation de la figure 1) ou la voie descendante 2bb (configuration de la figure 2), est possible mais ne confère pas d'avantages substantiels par rapport au mode de réalisation et configurations ici décrites.

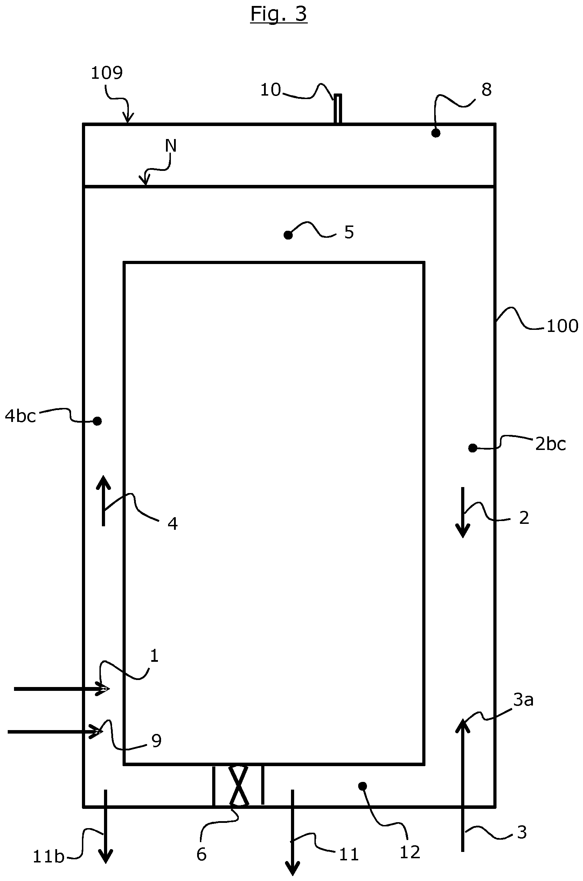

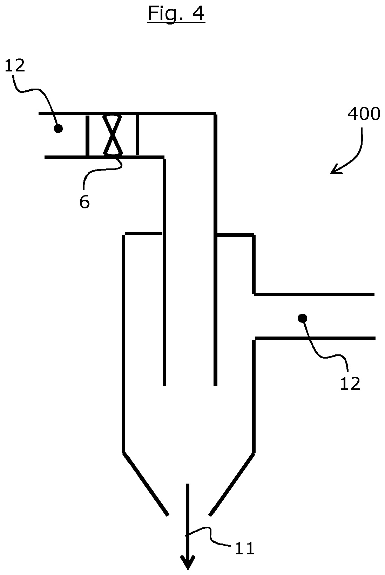

Les figures 3 et 4 présentent une troisième configuration dans lequel le chemin de circulation est délimité par :
- un premier tube définissant un chemin ascendant 4bc,
- un deuxième tube définissant un chemin descendant 2bc,
- un premier conduit transversal 5 agencé pour que le premier et le deuxième tubes débouchent, à leurs parties supérieures, dans ce premier conduit transversal 5, le réacteur comprenant, dans une partie supérieure du premier conduit transversal 5, un volume de dégazage 8 agencé pour recueillir des effluents gazeux contenus dans les boues, et
- un deuxième conduit transversal 12 agencé pour que le premier et le deuxième tubes débouchent, à leurs parties inférieures, dans ce deuxième conduit transversal 12.

Similairement au mode de réalisation de la figure 1 et à la configuration de la figure 2, le volume de dégazage 8 est délimité, en figure 3, par le niveau N atteint par les boues contenues dans l'enceinte 100, par la surface supérieure 109 de l'enceinte 100 et par une partie de la face interne de la chambre intérieure de l'enceinte 100.

En outre, le circulateur 6, par exemple une pompe centrifuge, est agencé, dans cet exemple, pour générer la circulation des boues dans le deuxième conduit transversal 12.

Dans cette troisième configuration, l'entrée de vapeur 3 est agencée pour injecter la vapeur en bas du chemin descendant 2bc, à contre-sens de la circulation des boues contenues dans le réacteur.

L'entrée de boues 1 est agencée pour introduire les boues froides par un piquage dans le bas du chemin ascendant 4bc afin de permettre aux boues de cheminer un maximum de temps avant leur arrivée au niveau du circulateur 6 et leur extraction du réacteur par la sortie de boues 11.

Le premier conduit transversal 5, dans lequel les boues circulent à vitesse moindre, permet le dégazage des incondensables vers le volume de dégazage 8 puis vers un piquage d'évacuation 10.

Dans cette troisième configuration, de l'acide peut être injecté, par un piquage 9, dans le chemin ascendant 4bc (tel qu'illustré en figure 3) ou dans le chemin descendant 2bc (non représenté).

Un piquage d'évacuation 11 est situé dans le deuxième conduit transversal 12 pour constituer la sortie de boues, de préférence en amont du circulateur 6 (relativement à la circulation des boues), de manière à ce que les particules minérales contenues dans les boues soient évacuées prioritairement, par gravité ou par l'intermédiaire d'un hydro-cyclone 400 tel que représenté sur la figure 4.

Un piquage de secours 11b est mis en place en partie basse du chemin ascendant 4bc pour évacuer les éventuelles accumulations de particules lourdes se produisant à cet endroit. L'ouverture périodique de ce piquage de secours 11b permet d'évacuer périodiquement les particules accumulées.

L'introduction des boues peut alternativement être réalisée dans le chemin descendant 2bc (non représenté). Dans ce cas, le circulateur 6 est préférentiellement situé dans le chemin ascendant 4bc (non représenté).

Toute autre configuration des positions respectives du circulateur 6 et de l'entrée de boues 1 est possible mais ne confère pas d'avantages substantiels par rapport au mode de réalisation et aux configurations ici décrites.

A noter que si le circulateur 6 est constitué d'une pompe type centrifuge pouvant accepter des éléments solides, les boues peuvent aussi être injectées directement en amont du circulateur 6 en vue d'être broyées dans ce dernier pour une meilleure homogénéisation (non représenté). Néanmoins, cette manière de faire implique nécessairement un prétraitement des boues avant leur introduction dans le réacteur pour s'assurer qu'aucun enroulement de fibres n'ait lieu dans le circulateur 6.

La figure 4 illustre un hydrocyclone 400 pouvant être monté sur le réacteur de la figure 3 dans le deuxième conduit transversal 12, au niveau du piquage d'évacuation 11.

Un tel hydrocyclone 400 est agencé pour éliminer sélectivement des particules lourdes (sables lourds) contenues dans les boues. Le principe par centrifugation, connu de l'homme du métier, permet d'éliminer les sables lourds laissant la matière légère liquéfiée continuer son cheminement en circulant dans le réacteur.

La présence d'un hydrocyclone 400 tel qu'illustré en figure 4 dans un réacteur tel qu'illustré en figure 3 permet de laisser circuler un minimum de matières abrasives dans la chambre intérieure de l'enceinte 100 et dans le circulateur 6.

Bien sûr, l'invention n'est pas limitée aux exemples qui viennent d'être décrits et de nombreux aménagements peuvent être apportés à ces exemples sans sortir du cadre de l'invention. Par exemple, l'hydrocyclone de la figure 4 pourrait être incorporé au mode de réalisation de la figure 1 ou à la configuration de la figure 2. De plus, les différentes caractéristiques, formes, variantes, configurations et le mode de réalisation de l'invention peuvent être associés les uns avec les autres selon diverses combinaisons dans la mesure où ils ne sont pas incompatibles ou exclusifs les uns des autres.

## Revendications

1. Réacteur de traitement, notamment par carbonisation hydrothermale, de boues chargées en matières organiques, comportant :
- une enceinte (100) comprenant une chambre intérieure agencée pour recevoir les boues et pour constituer un chemin de circulation des boues apte à permettre une circulation des boues,
- une entrée de boues (1) agencée pour introduire les boues dans une zone d'introduction de boues de la chambre intérieure,
- une sortie de boues (11) agencée pour évacuer au moins une partie des boues contenues dans la chambre intérieure, et
- une entrée de vapeur (3) agencée pour injecter de la vapeur dans une zone d'injection de vapeur de la chambre intérieure suivant un sens d'injection de vapeur, le sens d'injection de vapeur étant à contre-courant du sens de circulation des boues dans la zone d'injection de vapeur le long du chemin de circulation, la zone d'injection de vapeur étant séparée de la zone d'introduction de boues,
- un circulateur (6) agencé pour faire circuler les boues dans la chambre intérieure suivant le chemin de circulation,
ledit réacteur étant **caractérisé en ce que** :
- l'enceinte (100) comprend une paroi (101) formant un tube et étant agencée pour séparer deux parties du chemin de circulation ayant des sens opposés de circulation de boues (2, 4),
- la chambre intérieure comprend un espace intérieur (2b) situé à l'intérieur du tube (101) et un espace extérieur (4b) situé à l'extérieur du tube (101), le réacteur étant agencé :
- pour que la zone d'injection de vapeur soit située dans une région inférieure de l'espace intérieur (2b) du tube (101), la région inférieure comprenant une première extrémité du tube (101),
- pour que le circulateur (6) soit situé, au moins en partie, dans une région supérieure de l'espace intérieur (2b) du tube (101), la région supérieure comprenant une deuxième extrémité du tube (101) opposée à la première extrémité, et
- pour que la zone d'introduction de boues soit située entre la région inférieure et la région supérieure de l'espace intérieur (2b) du tube (101),
et **en ce que** le chemin de circulation comprend au moins une boucle fermée passant par l'espace intérieur (2b) et par l'espace extérieur (4b) du tube (101).

2. Réacteur selon la revendication 1, **caractérisé en ce que** la chambre intérieure est de dimension verticale L, et **en ce que** la zone d'injection de vapeur est séparée de la zone d'introduction de boues par une distance supérieure à L/12, de préférence supérieure à L/8, plus préférentiellement supérieure à L/4.

3. Réacteur selon l'une quelconque des revendications 1 ou 2, **caractérisé en ce qu'**il comprend, dans une partie supérieure de la chambre intérieure, un volume de dégazage (8) agencé pour recueillir des effluents gazeux contenus dans les boues, le réacteur comprenant en outre au moins un évent (10) agencé pour évacuer ces effluents gazeux.

4. Réacteur selon l'une quelconque des revendications 1 à 3, **caractérisé en ce qu'**il comporte au moins un orifice (9) agencé pour injecter de l'acide dans l'enceinte (100).

5. Réacteur selon l'une quelconque des revendications 1 à 4, **caractérisé en ce que** l'enceinte (100) comprend un chemisage intérieur (101) agencé pour délimiter le chemin de circulation de manière à constituer :
- une voie ascendante (4b) dans un passage annulaire compris entre une face interne de la chambre intérieure et le chemisage (101),
- une voie descendante (2b) dans un conduit cylindrique formé par le chemisage (101),
- un tronçon transversal supérieur (21) agencé pour autoriser une circulation des boues de la voie ascendante (4b) vers la voie descendante (2b),
- un tronçon transversal inférieur (22) agencé pour autoriser une circulation des boues de la voie descendante (2b) vers la voie ascendante (4b).

6. Réacteur selon l'une quelconque des revendications 1 à 5, **caractérisé en ce qu'**il comporte en outre un hydrocyclone (400) agencé pour éliminer sélectivement des particules lourdes contenues dans les boues en circulation dans l'enceinte (100).

## Patentansprüche

1. Behandlungsreaktor, insbesondere für die hydrothermale Karbonisierung, von mit organischen Stoffen beladenen Schlämmen, der folgendes aufweist:
- ein Gehäuse (100) mit einer inneren Kammer, die zum Aufnehmen der Schlämme und zur Bildung einer Schlammzirkulationsstrecke eingerichtet ist, die dazu geeignet ist, eine Zirkulation der Schlämme zu ermöglichen,
- einen Schlammeingang (1), der zum Einführen der Schlämme in eine Schlammeinführungszone der inneren Kammer eingerichtet ist,
- einen Schlammausgang (11), der zur Abführung zumindest eines Teils der in der inneren Kammer enthaltenen Schlämme eingerichtet ist, und
- einen Dampfeingang (3), der zur Einspritzung von Dampf in eine Dampfeinspritzzone der inneren Kammer entsprechend einer Dampfeinspritzrichtung eingerichtet ist, wobei die Dampfeinspritzrichtung in Gegenstromrichtung der Schlammzirkulationsrichtung in der Dampfeinspritzzone entlang der Zirkulationsstrecke verläuft, wobei die Dampfeinspritzzone von der Schlammeinführungszone getrennt ist,
- einen Zirkulator (6), der zum Herbeiführen einer Zirkulation der Schlämme in der inneren Kammer entlang der Zirkulationsstrecke eingerichtet ist,
wobei der Reaktor **dadurch gekennzeichnet, dass**
- das Gehäuse (100) eine Wand (101) umfasst, die ein Rohr bildet und derart eingerichtet ist, dass sie die Zirkulationsstrecke in zwei Teile mit entgegengesetzter Schlammzirkulationsrichtung (2, 4) trennt,
- die innere Kammer einen Innenraum (2b) umfasst, der sich innerhalb des Rohrs (101) befindet und einen Außenraum (4b), der sich außerhalb des Rohrs (101) befindet, wobei der Reaktor derart eingerichtet ist, dass
- die Dampfeinspritzzone sich einem unteren Bereich des Innenraums (2b) des Rohrs (101) befindet, wobei der untere Bereich ein erstes Ende des Rohrs (101) umfasst,
- so dass der Zirkulator (6) sich zumindest teilweise in einem oberen Bereich des Innenraums (2b) des Rohrs (101) befindet, wobei der obere Bereich ein zweites Ende des Rohrs (101) umfasst, das sich gegenüber von dem ersten Ende befindet, und
- so dass die Schlammeinführungszone sich zwischen dem unteren Bereich und dem oberen Bereich des Innenraums (2b) des Rohrs (101) befindet,
und dass die Zirkulationsstrecke mindestens einen geschlossenen Kreislauf umfasst, der durch den Innenraum (2b) und den Außenraum (4b) des Rohrs (101) verläuft.

2. Reaktor gemäss Anspruch 1, **dadurch gekennzeichnet, dass** die innere Kammer die vertikale Abmessung L aufweist, und dass die Dampfeinspritzzone von der Schlammeinführungszone durch einen Abstand von mehr als L/12, bevorzugterweise von mehr als L/8, noch bevorzugterweise von mehr als L/4 getrennt ist.

3. Reaktor gemäss einem der Ansprüche 1 oder 2, **dadurch gekennzeichnet, dass** er in einem oberen Teil der inneren Kammer ein Entgasungsvolumen (8) umfasst, das zum Sammeln der in den Schlämmen enthaltenen Abgase eingerichtet ist, wobei der Reaktor außerdem wenigstens eine Entlüftungsöffnung (10) zur Abführung dieser Abgase umfasst.

4. Reaktor gemäss einem der Ansprüche 1 bis 3, **dadurch gekennzeichnet, dass** er mindestens eine Öffnung (9) umfasst, die zum Einspritzen von Säure in das Gehäuse (100) eingerichtet ist.

5. Reaktor gemäss einem der Ansprüche 1 bis 4, **dadurch gekennzeichnet, dass** das Gehäuse (100) eine Innenauskleidung (101) umfasst, die zur Begrenzung der Zirkulationsstrecke eingerichtet ist, so dass
- ein aufsteigender Durchflussweg (4b) in einer ringförmigen Passage zwischen einer Innenseite der inneren Kammer und der Innenauskleidung (101),
- ein absteigender Durchflussweg (2b) in einer von der Innenauskleidung (101) gebildeten zylindrischen Leitung,
- ein oberer Querabschnitt (21), der zur Ermöglichung einer Zirkulation der Schlämme von dem aufsteigenden Durchflussweg (4b) zum absteigenden Durchflussweg (2b) eingerichtet ist,
- ein unterer Querabschnitt (22), der zur Ermöglichung einer Zirkulation der Schlämme von dem absteigenden Durchflussweg (2b) zum aufsteigenden Durchflussweg (4b) eingerichtet ist, gebildet wird.

6. Reaktor gemäss einem der Ansprüche 1 bis 5, **dadurch gekennzeichnet, dass** er außerdem einen Hydrozyklon (400) umfasst, der zum selektiven Entfernen der schweren Partikel eingerichtet ist, die in den im Gehäuse (100) zirkulierenden Schlämmen enthalten sind.

## Claims

1. A reactor for treating sludge containing organic matter, particularly by hydrothermal carbonization, including:
- a vessel (100) comprising an inner chamber arranged to receive the sludge and to form a circulation path for the sludge adapted to allow the sludge to circulate,
- a sludge inlet (1) arranged to introduce the sludge into a sludge introduction area of the inner chamber,
- a sludge outlet (11) arranged to discharge at least part of the sludge contained in the inner chamber, and
- a steam inlet (3) arranged to inject steam in a steam injection zone of the inner chamber along a steam injection direction, the steam injection direction being against the sludge circulation direction in the steam injection zone along the circulation path, the steam injection zone being separated from the sludge introduction zone,
- a circulator (6) arranged to circulate the sludge in the inner chamber along the circulation path,
said reactor being **characterized in that**
- the vessel (100) comprises a wall (101) forming a tube and being arranged to separate two parts of the circulation path having opposing sludge circulation directions (2, 4),
- the inner chamber comprises an inner space (2b) located inside the tube (101) and an outer space (4b) located outside the tube (101), the reactor being arranged:
- so that the steam injection zone is located in a lower region of the inner space (2b) of the tube (101), the lower region comprising a first end of the tube (101),
- so that the circulator (6) is located, at least in part, in an upper region of the inner space (2b) of the tube (101), the upper region comprising a second end of the tube (101) opposite the first end, and
- so that the sludge introduction zone is located between the lower region and the upper region of the inner space (2b) of the tube (101),
and **in that** the circulation path comprises at least a closed loop.going through the inner space (2b) and through the outer space (4b) of the tube (101).

2. The reactor according to claim 1, **characterized in that** the inner chamber is of vertical dimension L, and wherein the steam injection zone is separated from the sludge introduction zone by a distance greater than L/12, preferably greater than L/8, more preferably greater than L/4.

3. The reactor according to any one of claims 1 or 2 , **characterized in that** it comprises, in an upper portion of the inner chamber, a degassing volume (8) arranged to collect gaseous effluents contained in the sludge, the reactor further comprising at least one vent (10) arranged to discharge these gaseous effluents.

4. The reactor according to any one of claims 1 to 3, **characterized in that** it comprises at least one orifice (9) arranged to inject the acid to the vessel (100).

5. The reactor according to any one of claims 1 to 4, **characterized in that** the vessel (100) comprises an inner jacketing (101) arranged to delimit the circulation path so as to constitute:
- an ascending channel (4b) in an annular passage between an internal face of the inner chamber and jacketing (101),
- a descending channel (2b) in a cylindrical conduit formed by the jacketing (101),
- an upper transverse section (21) arranged to allow sludge to circulate from the ascending channel (4b) to the descending channel (2b),
- a lower transverse section (22) arranged to allow sludge to circulate from the descending channel (2b) to the ascending channel (4b).

6. The reactor according to any one of claims 1 to 5, **characterized in that** it further comprises a hydrocyclone (400) arranged to selectively eliminate heavy particles contained in the sludge circulating in the vessel (100).
